# EUROPÄISCHE PATENTSCHRIFT

(11) **EP 2 321 087 B1**
(45) Veröffentlichungstag und Bekanntmachung des Hinweises auf die Patenterteilung: **07.11.2012**
(21) Anmeldenummer: 09777304.8
(22) Anmeldetag: 20.07.2009
(51) Int. Cl.: B23Q 3/18, B23Q 37/00, B25B 5/12

(54) **VORRICHTUNG ZUR LÖSBAREN VERBINDUNG VON WENIGSTENS ZWEI ANLAGEMODULEN UND MODULARE ANLAGE**
DEVICE FOR DETACHABLY CONNECTING AT LEAST TWO SYSTEM MODULES AND MODULAR SYSTEM
DISPOSITIF POUR RELIER DE MANIÈRE DETACHABLE AU MOINS DEUX MODULES D'UN SYSTÈME ET SYSTÈME MODULAIRE

(30) Priorität: 21.07.2008 DE 102008034087
(43) Veröffentlichungstag der Anmeldung: 18.05.2011
(73) Patentinhaber: Coatema Maschinenbau Gmbh, 41539 Dormagen (DE)
(72) Erfinder: DIEKE, Detlev, 41542 Dormagen (DE)
(74) Vertreter: Kietzmann, Lutz
(86) Internationale Anmeldenummer: PCT/EP2009/005252
(87) Internationale Veröffentlichungsnummer: WO 2010/009853

(56) Entgegenhaltungen:
- WO-A1-98/58764
- DE-U1- 29 708 566
- US-B1- 6 681 464

## Beschreibung

Die Erfindung betrifft eine Vorrichtung zur lösbaren Verbindung von wenigstens zwei Anlagemodulen einer Anlage, insbesondere einer Anlage zur Oberflächenbehandlung und/oder Beschichtung eines Werkstücks, sowie eine modular aufgebaute, wenigstens zwei Anlagemodule umfassende Anlage.

Eine solche Vorrichtung ist z.B. aus dem Patentdokument EP-A-0614725 bekannt.

Anlagen, die beispielsweise zur Oberflächenbehandlung und/oder Beschichtung von Werkstücken geeignet sind, umfassen in der Regel mehrere Behandlungsstationen, die von dem zu behandelnden Werkstück durchlaufen werden müssen. Die verschiedenen Behandlungsstationen werden aus separaten Funktionseinheiten gebildet, deren Aneinanderreihung eine bestimmte Anlagenkonfiguration ergibt. Derartige Funktionseinheiten können bei den vorstehend beispielhaft genannten Anlagen verschiedene Auftragseinheiten, Trockeneinheiten und dergleichen sein. Um eine vorgegebene Anlagenkonfiguration gegebenenfalls ändern und/oder die Anlage erweitern zu können, sind die Anlagen häufig modular aufgebaut. Dadurch können einzelne Funktionseinheiten herausgenommen, ausgetauscht und/oder hinzugefügt werden. Ein modularer Anlagenaufbau steigert somit die Vielseitigkeit der Anlage.

Bei der Verbindung zweier Anlagemodule gilt es diese zueinander auszurichten, um einen störungsfreien Prozessablauf zu gewährleisten. Beispielsweise hat regelmäßig eine Ausrichtung im Hinblick auf die Höhenlagen der Anlagemodule zu erfolgen, da kein Hallenboden wirklich eben ist. Des Weiteren muss sichergestellt sein, dass die ausgerichteten Anlagemodule ihre Lage zueinander beibehalten. In der Regel werden sie daher nach dem Ausrichten miteinander verschraubt. Eine Schraubverbindung bietet den Vorteil, dass sie lösbar ist, um gegebenenfalls später einmal eine Funktionseinheit bzw. ein Anlagenmodul herausnehmen, austauschen und/oder hinzufügen zu können.

Das Ausrichten der Anlagenmodule erweist sich in der Regel als sehr aufwendig. Häufig ist der Einsatz optischer Systeme, beispielsweise zur Nivellierung der Anlagemodule, erforderlich. Werden die einzelnen Module miteinander verschraubt, müssen zudem die Bohrungen zur Aufnahme der Befestigungsschrauben an den jeweils zu verbindenden Anlagemodulen in Überdeckung gebracht werden. Gegebenenfalls sind die Bohrungen zu versetzen, wenn das Ausrichten der Anlagemodule dazu geführt hat, dass keine Überdeckung gegeben ist. Die Folge sind oftmals lange Auf- bzw. Umbauzeiten, in denen die Anlage still steht.

Aufgabe der vorliegenden Erfindung ist es daher, den Auf- oder Umbau einer modularen Anlage zu vereinfachen.

Die Aufgabe wird gelöst durch eine Vorrichtung zur lösbaren Verbindung von Anlagemodulen mit den Merkmalen des Anspruchs 1 und eine Anlage mit den Merkmalen des Anspruchs 8. Vorteilhafte Weiterbildungen werden in den jeweiligen Unteransprüchen beschrieben.

Erfindungsgemäß zeichnet sich die Vorrichtung durch eine Positionierungseinrichtung und eine Verriegelungseinrichtung aus. Die Positionierungseinrichtung umfasst ein erstes Kopplungselement und ein in Eingriff mit dem ersten Kopplungselement bringbares zweites Kopplungselement, deren komplementär ausgebildete Anlageflächen beim Zusammenführen der Kopplungselemente eine Zentrierung und schließlich einen Formschluss der Kopplungselemente in Bezug auf eine erste Achse (x) und eine im Wesentlichen senkrecht zur ersten Achse stehende zweite Achse (y) bewirken. Die Verriegelungseinrichtung umfasst ein erstes Verschlusselement und ein in Eingriff mit dem ersten Verschlusselement bringbares zweites Verschlusselement, die in Eingriff stehend einen Formschluss in Bezug auf eine weitere, im Wesentlichen senkrecht zu den Achsen (x, y) stehende Achse (z) und damit eine Sicherung des Formschlusses der beiden Kopplungselemente (1.1, 1.2) bewirken.

Die erfindungsgemäße Vorrichtung ist demnach geeignet, mehrere Funktionen zu erfüllen. Bei Anordnung des ersten Kopplungselementes an einem ersten Anlagemodul und bei Anordnung des zweiten Kopplungselementes an einem zweiten Anlagemodul kann die erfindungsgemäße Vorrichtung zur Verbindung der beiden Anlagemodule eingesetzt werden. Darüber hinaus wird beim Zusammenführen der beiden Kopplungselemente eine automatische Zentrierung und damit eine Ausrichtung der Anlagemodule zueinander in Bezug auf wenigstens zwei Raumachsen bewirkt. Der Formschluss der beiden Kopplungselemente gibt somit eine Position der Anlagemodule in Bezug auf zumindest eine durch die Achsen x, y definierten Ebene vor. Vorzugsweise ist diese Ebene im Wesentlichen senkrecht zur Aufstellfläche der Anlagemodule, beispielsweise zum Hallenboden, ausgerichtet. Das heißt, dass zumindest eine Ausrichtung der Anlagemodule hinsichtlich ihrer Höhenlage und ihrer seitlichen Lage erfolgt. Eine Festlegung der Lage in Bezug auf die dritte Raumachse, erfolgt, indem die Anlageflächen der beiden Kopplungselemente in Anlage gebracht und die Kopplungselemente durch die Verriegelungseinrichtung zusammengehalten werden. Die Verriegelungseinrichtung sichert somit den Formschluss der Kopplungselemente und gewährleistet auf diese Weise eine sichere Verbindung der mit den Kopplungselementen verbundenen Anlagemodule. Bei Bedarf ermöglicht sie zudem das wiederholte Lösen der Verbindung. Durch den Einsatz einer erfindungsgemäßen Vorrichtung können somit Auf- oder Umbauzeiten einer individuell konfigurierten Anlage erheblich verkürzt werden, da das Ausrichten der einzelnen Anlagemodule zueinander als separater Arbeitsschritt entfällt. Das Ausrichten erfolgt automatisch beim Zusammenführen der beiden Kopplungselemente.

Nach einer bevorzugten Ausführungsform der Erfindung bilden die Anlageflächen eines Kopplungselementes wenigstens eine im Wesentlichen keilförmige Ausnehmung und/oder einen im Wesentlichen keilförmigen Körper, der in Eingriff mit einer komplementär ausgebildeten, im Wesentlichen keilförmigen Ausnehmung des jeweils anderen Kopplungselementes gebracht werden kann. Das heißt, dass wenigstens zwei Anlageflächen eines Kopplungselementes schräg zueinander stehen und mit den komplementär ausgebildeten Anlageflächen des jeweils anderen Kopplungselementes in der Weise zusammenwirken, dass sich die beiden Kopplungselemente beim Zusammenführen selbst zentrieren. Die vorgeschlagene Keilform erleichtert zudem das Einfädeln der beiden Kopplungselemente. Im Wesentlichen keilförmig bedeutet vorliegend, dass die Anlageflächen beispielsweise auch einen gebogenen Verlauf aufweisen können.

Weiterhin bevorzugt ist jedes Kopplungselement mit einer im Wesentlichen keilförmigen Ausnehmung und einem im Wesentlichen keilförmigen, in Eingriff mit einer im Wesentlichen keilförmigen Ausnehmung des jeweils anderen Kopplungselementes bringbaren Körper ausgestattet. Alternativ können aber auch zwei im Wesentlichen keilförmige Ausnehmungen an einem und zwei im Wesentlichen keilförmige und in Eingriff mit diesen Ausnehmungen bringbare Körper an dem jeweils anderen Kopplungselement ausgebildet sein. Dabei wirkt die erste Paarung Ausnehmung/Körper bevorzugt in der Weise zusammen, dass sie eine Zentrierung der Kopplungselemente in Bezug auf eine erste Achse ermöglicht, während die zweite Paarung eine Ausrichtung der Kopplungselemente auf eine im Wesentlichen senkrecht hierzu stehende Achse ermöglicht.

Vorzugsweise ist jeweils ein Verschlusselement der Verriegelungseinrichtung mit einem Kopplungselement der Positionierungseinrichtung verbunden. Zur Verbindung der erfindungsgemäßen Vorrichtung mit einem ersten und einem zweiten Anlagemodul bedarf es daher lediglich der Befestigung der beiden Kopplungselemente mit jeweils einem Anlagemodul.

Nach einer weiteren bevorzugten Ausführungsform ist ein Verschlusselement der Verriegelungseinrichtung als Spannelement ausgebildet. Mit Hilfe des Spannelementes können die beiden Kupplungselemente beispielsweise zusammengezogen werden. Ist der Formschluss bewirkt, können die komplementär ausgebildeten Anlageflächen der beiden Kopplungselemente über das Spannelement gegeneinander verspannt werden. Auf diese Weise wird eine formschlüssige Verbindung der Kopplungselemente dauerhaft sicher gestellt.

Das Spannelement umfasst einen an einem Hebel angelenkten Bügel, dessen distales Ende derart geformt ist, dass es in Eingriff mit dem weiteren Verschlusselement gebracht werden kann. Beispielsweise kann das Ende des Bügels als Haken geformt sein, der geeignet ist, das andere Verschlusselement zu umgreifen. Alternativ kann das Ende des Bügels auch derart ausgebildet sein, dass es in eine Ausnehmung des anderen Verschlusselementes einsetzbar ist, wobei es eine die Ausnehmung begrenzende Kante oder Seitenfläche hintergreift. Zur Betätigung der Verriegelungseinrichtung wird zunächst der Bügel des einen Verschlusselementes in Eingriff mit dem anderen Verschlusselement gebracht. Danach wird der Drehpunkt des Bügelgelenkes durch Verschwenken des Hebels hinter den Drehpunkt des Hebelgelenkes bewegt, wobei die beiden Kopplungselemente zusammengezogen werden.

Um ein unbeabsichtigtes Entriegeln der Verriegelungsvorrichtung zu verhindern, weist das Spannelement bevorzugt eine den Hebel umgebende Sicherungshülse auf. Diese Sicherungshülse ist in Bezug auf die Längsachse A des Hebels verschiebbar. Dabei kann die Hülse eine Sicherungsposition einnehmen, in der eine Betätigung des Hebels und damit ein Entriegeln der Verriegelungseinrichtung ausgeschlossen ist. In dieser Position umgreift die Hülse zumindest teilweise auch den Bügel, so dass Bügel und Hebel in ihrer Lage fixiert sind.

Bevorzugt wird die Sicherungsposition der Sicherungshülse visuell, vorzugsweise durch eine Farbmarkierung, angezeigt. Die Farbmarkierung wird beispielsweise sichtbar, wenn die Hülse in die Sicherungsposition verschoben wird. Alternativ kann die Farbmarkierung auch sichtbar werden, wenn die Hülse nicht die Sicherungsposition einnimmt. Dann ist die Farbmarkierung als Warnhinweis zu verstehen. Bevorzugt werden weiterhin Maßnahmen getroffen, die verhindern, dass die Hülse unbeabsichtigt verschoben wird. Beispielsweise können Rastmittel vorgesehen sein, welche die Hülse in einer bestimmten Lage zum Hebel arretieren. Alternativ kann der Hebel auch mit einem Außengewinde und die Hülse mit einem Innengewinde versehen sein. Weiterhin kann vorgesehen sein, dass sich ein Reibschluss einstellt, wenn beispielsweise die Hülse über den Bügel geschoben wird.

Zur Befestigung der Vorrichtung an einem ersten und einem zweiten Anlagemodul sind in den Kopplungselementen Bohrungen zur Aufnahme von Befestigungsschrauben oder Schraubbolzen vorgesehen. Vorzugsweise sind die Bohrungen als Langlöcher ausgebildet, um eine Ausrichtung der Kopplungselemente zu ermöglichen. Die Bohrungen sollten eine Ausrichtung in Bezug auf wenigstens eine Achse x, y und/oder z ermöglichen.

Da die Kopplungs- und Verschlusselemente dazu eingesetzt werden sollen, Anlagemodule, die 500 kg und mehr wiegen, zu bewegen und gegebenenfalls auch anzuheben, ist die Belastung dieser Elemente sehr hoch. Vorzugsweise bestehen die Kopplungselemente daher ganz oder teilweise aus Metall, insbesondere Grauguss, oder Keramik oder Kunststoff, insbesondere Polytetrafluorethylen (PTFE). Als vorteilhaft erweisen sich insbesondere die guten Gleiteigenschaften von PTFE. Die Verriegelungseinrichtung dagegen besteht bevorzugt ganz oder teilweise aus Metall.

Die zur Lösung der Aufgabe ebenfalls vorgeschlagene Anlage umfasst wenigstens zwei Anlagemodule, die über eine erfindungsgemäße Vorrichtung miteinander verbunden sind. Die Anlagemodule sind vorzugsweise bereits werkseitig mit einer erfindungsgemäßen Vorrichtung ausgestattet. Es ist aber auch möglich, bestehende modular aufgebaute Anlagen nachzurüsten, um eine Anlage im Sinne der Erfindung zu schaffen. Wenigstens ein erstes und ein zweites Anlagemodul sind dazu mit einem ersten und/oder einem zweiten Kopplungselement einer erfindungsgemäßen Vorrichtung zu verbinden. Ein Anlagemodul, das ein beidseitiges Ankoppeln ermöglichen soll, ist auf der einen Anschlussseite mit wenigstens einem ersten und auf der anderen Anschlussseite mit wenigstens einem zweiten Kopplungselement auszustatten.

Nach einer bevorzugten Ausführungsform umfasst ein Anlagemodul einer erfindungsgemäßen Anlage eine Rahmenkonstruktion zur Aufnahme einer separaten Funktionseinheit. Weiterhin bevorzugt besteht die Rahmenkonstruktion aus Profilteilen und gegebenenfalls Verbindern, die modulartig zu einem Rahmen zusammengesetzt sind. Als Profilteile werden vorzugsweise Aluminiumprofile eingesetzt, die zunächst auf Länge geschnitten und dann miteinander zu einem Rahmen verschraubt werden. Auf diese Weise lassen sich tragfähige und stabile Rahmenkonstruktionen herstellen. Bei besonders schwergewichtigen Funktionseinheiten kann als Rahmenkonstruktion beispielsweise auch eine Stahlschweißkonstruktion eingesetzt werden, um die Stabilität zu erhöhen. Gleichermaßen kann auch eine massive Ständerung in Verbindung oder an Stelle einer Rahmenkonstruktion vorgesehen sein.

In die jeweilige Rahmenkonstruktion wird die Funktionseinheit eingesetzt und mit der Rahmenkonstruktion verbunden, vorzugsweise verschraubt. Die Funktionseinheit bildet dann mit der Rahmenkonstruktion ein Anlagemodul. Zur Verbindung eines solchen Anlagemoduls mit einem weiteren Anlagemodul nimmt die Rahmenkonstruktion ferner wenigstens ein Kopplungselement einer erfindungsgemäßen Vorrichtung auf. Das Kopplungselement kann ebenfalls mit der Rahmenkonstruktion verschraubt sein.

Weiterhin bevorzugt weist die Rahmenkonstruktion Rollen oder Räder auf, um das Anlagemodul, das es zusammen mit der Funktionseinheit bildet, verfahren zu können. Der Einsatz von Rollen oder Rädern stellt die Mobilität des Anlagemoduls sicher. Zudem ist eine geringere Kraft erforderlich, um die Anlagemodule über eine erfindungsgemäße Vorrichtung zusammenzuführen. Entsprechend verringert sich auch die Belastung der hierzu eingesetzten Kopplungs- und Verschlusselemente. Vorzugsweise sind höhenverstellbare Rollen oder Räder vorzusehen, die ein Nachstellen bei unebenen Hallenböden ermöglichen. Das Nachstellen empfiehlt sich insbesondere, wenn die Höhendifferenz so groß ist, dass die Kopplungselemente zusätzlich durch das Gewicht eines zumindest teilweise über dem Hallenboden schwebenden Anlagemoduls belastet werden.

Der Wunsch, eine modular aufgebaute Anlage beliebig ändern und/oder erweitern zu können, setzt ferner ein flexibles System zur Versorgung der einzelnen Anlagemodule mit elektrischer Energie oder anderen Medien voraus. Ein Anlagemodul, bevorzugt jedes Anlagemodul, weist daher Medien- und/oder Energieversorgungsanschlüsse auf, mittels derer es an externe Medien- und/oder Energieversorgungsleitungen oder an entsprechende Anschlüsse eines weiteren Anlagemoduls anschließbar ist. Die jeweiligen Anschlüsse erfolgen dabei vorzugsweise über Schnellkupplungen.

Darüber hinaus umfasst ein Anlagemodul, bevorzugt jedes Anlagemodul, eine eigene, auf die jeweilige Funktionseinheit abgestimmte Steuerungs- und/oder Regelungstechnik.

Die Vorteile der Erfindung zeigen sich insbesondere in der Variabilität einer mit einer erfindungsgemäßen Vorrichtung ausgestatteten Anlage. Erfordernisse, die eine geänderte Anlagenkonfiguration erfordern, wie beispielsweise geänderte Produktionsabläufe, stellen kein Problem mehr dar. Bestehende Anlagen können ohne großen Aufwand nachträglich geändert und/oder erweitert werden. Ferner können neue und/oder fremde Funktionseinheiten oder Anlagekomponenten auf einfache Weise in eine bestehende Anlage integriert werden. Durch die Ausstattung der Anlage mit einer erfindungsgemäßen Vorrichtung können Anlagemodule schnell gekoppelt, entkoppeln und gegebenenfalls neu zusammengesetzt werden ohne dabei die einzelnen Anlagemodule erneut ausrichten zu müssen. Die Umbauzeiten werden dadurch erheblich verkürzt, so dass keine langen Stillstandzeiten der Anlage zu erwarten sind.

Eine bevorzugte Ausführungsform der Erfindung wird nachfolgend anhand der Zeichnungen näher beschrieben. Es zeigen:
- Fig. 1: eine Ansicht einer aus verschiedenen Anlagemodulen bestehenden Anlage,
- Fig. 2a-b: eine Ansicht und eine Draufsicht einer Vorrichtung zur Verbindung von wenigstens zwei Anlagemodulen in entkoppelter Stellung und
- Fig. 3a-b: eine Ansicht und eine Draufsicht der Vorrichtung der Fig. 2a-b in gekoppelter Stellung.

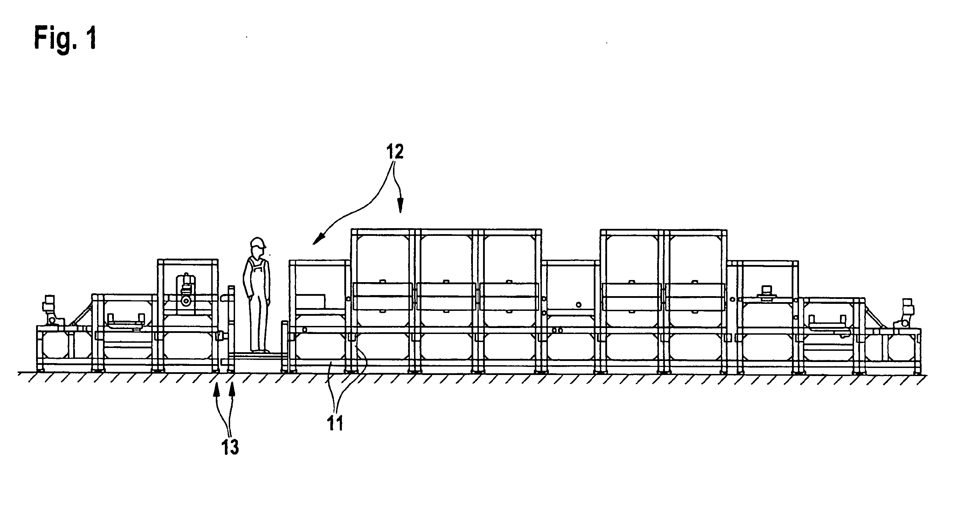

Wie in Fig. 1 dargestellt, weist eine erfindungsgemäße Anlage mehrere aneinandergereihte und untereinander verbundene Anlagemodule mit jeweils einer Funktionseinheit 12 auf. Derartige Funktionseinheiten können beispielsweise Materialzufiihrungs-, Förder-, Auftrags-, Trocken- oder sonstige Bearbeitungseinheiten oder Peripheriegeräte wie Schneideanlagen, Kaschierwerke, Inspektionstische usw. sein.

Jede Funktionseinheit 12 ist in eine selbsttragende Rahmenkonstruktion 11 eingesetzt und mit dieser verschraubt. Die Größe der Rahmenkonstruktion hängt von der Größe der jeweils einzusetzenden Funktionseinheit ab und kann in Anlagenlängsrichtung, das heißt in Werkstückförderrichtung, unterschiedlich sein. Hinsichtlich ihrer Abmessungen quer zur Anlagenlängsrichtung sind dagegen alle Rahmenkonstruktionen gleich, so dass die außen liegenden Rahmenflächen zu beiden Seiten der Anlage jeweils in einer Ebene liegen. Diese Ebene definiert die Befestigungsebene für die erfindungsgemäße Vorrichtung zur Verbindung der Anlagemodule.

Jede Rahmenkonstruktion 11 der Anlage aus Fig. 1 weist höhenverstellbare Rollen 13 auf, die ein Verfahren des Anlagemoduls ermöglichen. Die Höhenverstellung gelangt dann zum Einsatz, wenn der Aufstellungsort der Anlage derart uneben ist, dass ein Nachstellen aus Stabilitätsgründen ratsam erscheint. Zum Ausrichten der Anlagemodule im Hinblick auf ihre jeweilige Höhenlage werden die Rollen dagegen nicht eingesetzt, da das Ausrichten über eine erfindungsgemäße Vorrichtung zur Verbindung der Anlagemodule erfolgt.

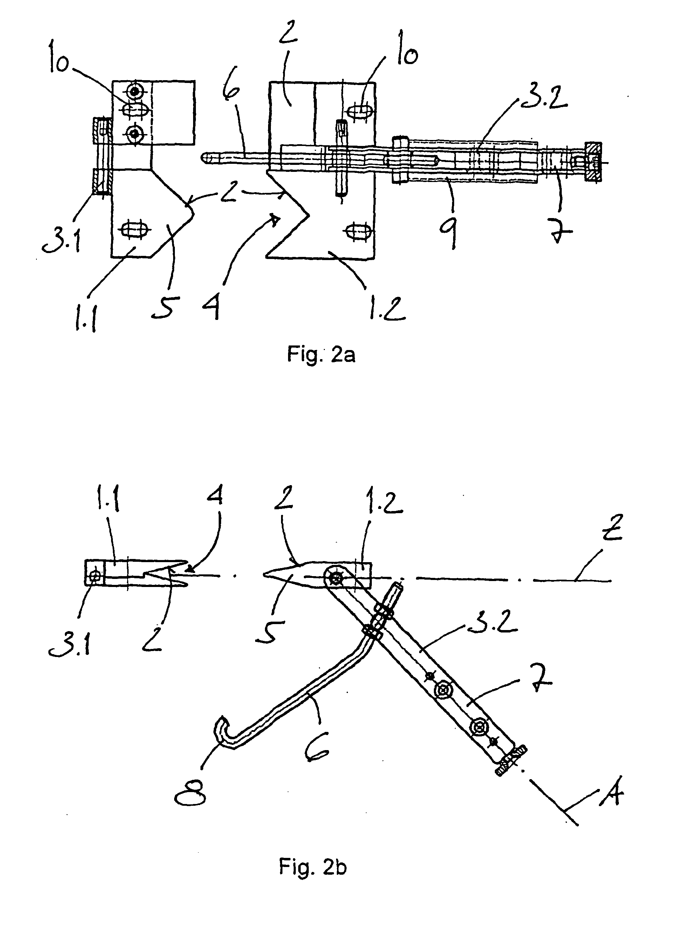

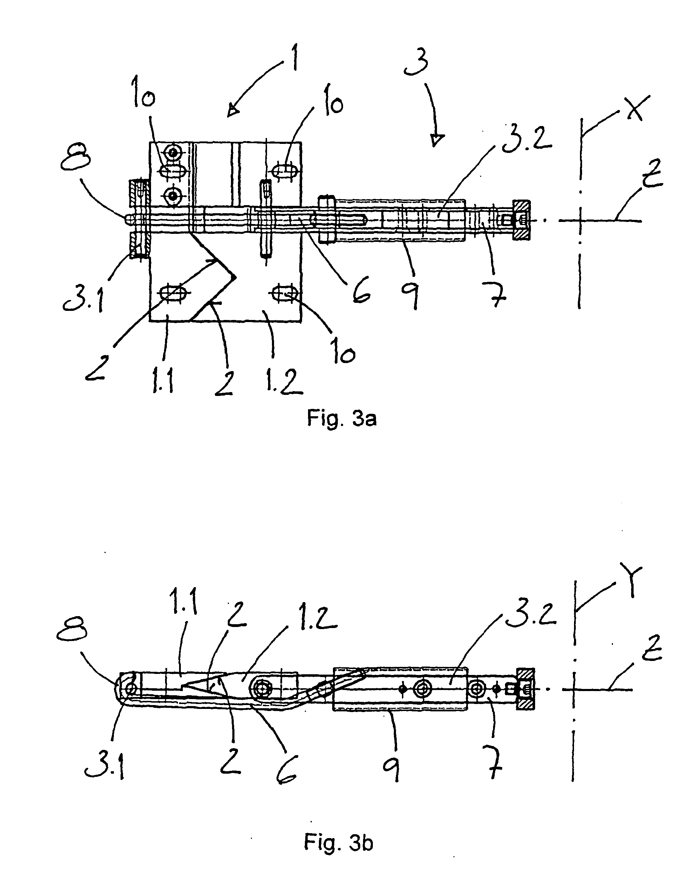

Die Komponenten einer solchen Vorrichtung sind im Detail in den Fig.2a-b und 3a-b dargestellt. Die Fig. 2a-b zeigen die Vorrichtung in entkoppelter Stellung, das heißt in einer Offenstellung. Die Vorrichtung umfasst eine Positionierungseinrichtung 1 mit einem ersten Kopplungselement 1.1 und einem zweiten Kopplungselement 1.2 sowie eine Verriegelungseinrichtung 3 mit einem ersten Verschlusselement 3.1 und einem zweiten Verschlusselement 3.2. Jedes Kopplungselement 1.1, 1.2 weist eine keilförmige Ausnehmung 4 und einen keilförmigen Körper 5 auf, der in Eingriff mit der keilförmigen Ausnehmung 4 des jeweils anderen Kopplungselementes 1.2, 1.1 gebracht werden kann. Die keilförmigen Ausnehmungen 4 und die keilförmigen Körper 5 werden von Anlageflächen 2 begrenzt, die komplementär zu den Anlageflächen 2 am jeweils anderen Kopplungselement ausgebildet sind. Das heißt, dass die beispielsweise eine Ausnehmung 4 formenden Anlageflächen 2 in einem bestimmten Winkel schräg zueinander stehen. Denselben Winkel umschließen die komplementär ausgebildeten Anlageflächen 2, die den entsprechenden keilförmigen Körper 5 bilden. Dieser Winkel beträgt vorliegend etwa 30° bei der oberen Ausnehmung/Körper-Paarung und etwa 90° bei der unteren Ausnehmung/Körper-Paarung. Der untere Winkel ist weniger spitz gewählt, da die untere Anlagefläche 2 der Ausnehmung 4 in der Lage sein muss, zumindest anteilig das Gewicht des Anlagemoduls zu tragen.

Jedes Kopplungselement 1.1, 1.2 ist mit einem Verschlusselement 3.1, 3.2 der Verriegelungseinrichtung 3 verbunden. Das Verschlusselement 3.1 umfasst einen senkrecht stehenden Ankerbolzen, der seitlich am Kopplungselement 1.1 gehalten ist. Das Verschlusselement 3.2 umfasst einen schwenkbar am Kopplungselement 1.2 angelenkten Hebel 7, an dem wiederum ein Bügel 6 angelenkt ist. Der Bügel 6 weist ein hakenförmiges Ende 8 auf, das um den Ankerbolzen des Verschlusselementes 3.1 gelegt werden kann. Ein Verschwenken des Hebels 7 bewirkt eine Verschiebung des Gelenkpunktes des Bügels relativ zum Gelenkpunkt des Hebels 7, wobei die beiden Kopplungselemente 1.1, 1.2 zusammengezogen werden, bis der gewünschte Formschluss, wie in den Fig. 3a-b dargestellt, erreicht ist. Dabei werden die beiden Kopplungselemente 1.1, 1.2 automatisch zentriert.

Zur Sicherung der formschlüssigen Verbindung weist das Verschlusselement 3.2 weiterhin eine Sicherungshülse 9 auf, die den Hebel 7 umgibt und in Bezug auf die Längsachse A des Hebels 7 verschiebbar ist. Um eine Fixierung der Hebel/Bügel-Stellung vorzunehmen wird die Hülse 9 zumindest teilweise über den Bügel 6 geschoben. In dieser Sicherungsstellung kann die Verriegelungseinrichtung 3 nicht entriegelt werden ohne vorher die Hülse 9 wieder verschoben und dabei den Bügel 6 freigegeben zu haben. Die Sicherungsstellung der Hülse 9 ist in den Fig. 3a-b dargestellt. Wie aus Fig. 3b ersichtlich, liegt in der Sicherungsstellung der Hülse 9 das dem hakenförmigen Ende 8 gegenüberliegende Ende des Bügels 6 an der Innenwandung der Hülse 9 an. Dabei entsteht ein Reibschluss, der eine unbeabsichtigte Verschiebung der Sicherungshülse 9 verhindert.

Den Fig.2a und 3a sind weiterhin Bohrungen 10 in den Kopplungselementen 1.1, 1.2 zu entnehmen, die der Aufnahme von Befestigungsschrauben zur Befestigung der Kopplungselemente 1.1, 1.2 an den Rahmenkonstruktionen 11 der Anlagemodule dienen. Die Bohrungen sind als Langlöcher ausgeführt, die eine Ausrichtung der Kopplungselemente zumindest in Bezug auf die Achse z ermöglichen.

Die Erfindung ist auf das dargestellte Ausführungsbeispiel einer Vorrichtung zur Verbindung von wenigstens zwei Anlagemodulen nicht beschränkt. Abwandlungen, insbesondere im Hinblick auf die Form und Ausrichtung der komplementär ausgebildeten Anlageflächen der Kopplungselemente, sind möglich. Sie sollten jedoch eine automatische Zentrierung der Kopplungselemente beim Zusammenführen ermöglichen. Des Weiteren kann auch die Verriegelungseinrichtung andere Verschlusselemente aufweisen, soweit diese die Aufrechterhaltung des Formschlusses der beiden Kopplungselemente gewährleisten.

### Bezugszeichen

- 1: Positionierungseinrichtung
- 1.1: erstes Kopplungselement
- 1.2: zweites Kopplungselement
- 2: Anlageflächen
- 3: Verriegelungseinrichtung
- 3.1: erstes Verschlusselement
- 3.2: zweites Verschlusselement
- 4: keilförmige Ausnehmung
- 5: keilförmiger Körper
- 6: Bügel
- 7: Hebel
- 8: Bügelende
- 9: Sicherungshülse
- 10: Bohrungen
- 11: Rahmenkonstruktion
- 12: Funktionseinheit
- 13: Rollen

## Patentansprüche

1. Vorrichtung zur lösbaren Verbindung von wenigstens zwei Anlagemodulen einer Anlage, insbesondere einer Anlage zur Oberflächenbehandlung und/oder Beschichtung eines Werkstücks, umfassend:
- eine Positionierungseinrichtung (1) umfassend ein erstes Kopplungselement (1.1) und ein in Eingriff mit dem ersten Kopplungselement bringbares zweites Kopplungselement (1.2), deren komplementär ausgebildete Anlageflächen (2) beim Zusammenführen der Kopplungselemente eine Zentrierung und einen Formschluss der Kopplungselemente in Bezug auf eine erste Achse (x) und eine im Wesentlichen senkrecht zur ersten Achse stehende zweite Achse (y) bewirken, und
- eine Verriegelungseinrichtung (3) umfassend ein erstes Verschlusselemerrt (3.1) und ein in Eingriff mit dem ersten Verschlusselement bringbares zweites Verschlusselement (3.2), die in Eingriff stehend einen Formschluss in Bezug auf eine weitere, im Wesentlichen senkrecht zu den Achsen (x, y) stehende Achse (z) und damit eine Sicherung des Formschlusses der beiden Kopplungselemente (1.1, 1.2) bewirken,
**dadurch gekennzeichnet, dass**
ein Verschlusselement (3.1, 3.2) der Verriegelungseinrichtung (3) als Spannelement ausgebildet ist, das einen an einem Hebel (7) angelenkten Bügel (6) umfasst, dessen distales Ende (8) in Eingriff mit dem anderen Verschlusselement (3.2, 3.1) bringbar ist.

2. Vorrichtung nach Anspruch 1, **dadurch gekennzeichnet, dass** die Anlageflächen (2) eines Kopplungselementes (1.1, 1.2) wenigstens eine im Wesentlichen keilförmige Ausnehmung (4) und/oder einen im Wesentlichen keilförmigen Körper (5) bilden, der in Eingriff mit einer im Wesentlichen keilförmigen Ausnehmung (4) des jeweils anderen Kopplungselementes (1.2, 1.1) bringbar ist.

3. Vorrichtung nach Anspruch 1 oder 2, **dadurch gekennzeichnet, dass** jeweils ein Verschlusselement (3.1, 3.2) der Vemegelungseinrichtung (3) mit einem Kopplungselement (1.1, 1.2) der Positionierungseinrichtung (1) verbunden ist.

4. Vorrichtung nach einem der vorhergehenden Ansprüche, **dadurch gekennzeichnet, dass** das Spannelement eine den Hebel (7) umgebende Sicherungshülse (9) aufweist, die in Bezug auf die Längsachse (A) des Hebels (7) verschiebbar ist, wobei die Hülse (9) eine Sicherungsposition einnehmen kann, in der eine Betätigung des Hebels (7) und damit ein Entriegeln der Verriegelungseinrichtung (1) ausgeschlossen ist.

5. Vorrichtung nach Anspruch 4 **dadurch gekennzeichnet, dass** die Sicherungsposition der Sicherungshülse (9) visuell, vorzugsweise durch eine Farbmarkierung, angezeigt wird.

6. Vorrichtung nach einem der vorhergehenden Ansprüche, **dadurch gekennzeichnet, dass** in den Kopplungselementen (1.1, 1.2) Bohrungen (10) zur Aufnahme von Befestigungsschrauben oder Schraubbolzen zur Verbindung der Kopplungselemente (1.1, 1.2) mit den Anlagemodulen vorgesehen sind, wobei die Bohrungen (10) vorzugsweise als Langlöcher ausgebildet sind, um eine Ausrichtung der Kopplungselemente zu ermöglichen.

7. Vorrichtung nach einem der vorhergehenden Ansprüche, **dadurch gekennzeichnet, dass** die Kopplungselemente (1.1, 1.2) ganz oder teilweise aus Metall, insbesondere Grauguss, oder Keramik oder Kunststoff, insbesondere Polytetrafluorethylen (PTFE), bestehen.

8. Anlage, insbesondere eine Anlage zur Oberflächenbehandlung und/oder Beschichtung eines Werkstücks, umfassend wenigstens zwei Anlagemodule, die über eine Vorrichtung nach einem der vorstehenden Ansprüche miteinander verbunden sind.

9. Anlage nach Anspruch 8, **dadurch gekennzeichnet, dass** ein Anlagemodul eine Rahmenkonstruktion (11) zur Aufnahme einer separaten Funktionseinheit (12) und wenigstens eines Kopplungselementes (1.1, 1.2) einer Vorrichtung nach einem der Ansprüche 1 bis 8 zur Verbindung mit einem wehren Anlagemodul umfasst.

10. Anlage nach Anspruch 9, **dadurch gekennzeichnet, dass** die Rahmenkonstruktion (11) Rollen (13) oder Räder zum Verfahren des Anlagemoduls aufweist.

11. Anlage nach einem der Ansprüche 8 bis 10, **dadurch gekennzeichnet, dass** ein Anlagemodul Medien- und/oder Energieversorgungsanschlüsse aufweist, mittels derer es an externe Medien- und/oder Energieversorgungsleitungen oder an entsprechende Anschlüsse eines weiteren Anlagemoduls anschließbar ist, wobei die jeweiligen Anschlüsse vorzugsweise über Schnellkupplungen erfolgen.

12. Anlage nach einem der Ansprüche 8 bis 11, **dadurch gekennzeichnet, dass** ein Anlagemodul eine eigene, auf die jeweilige Funktionseinheit (12) abgestimmte Steuerungs- und/oder Regelungstechnik umfasst.

## Claims

1. An apparatus for releasably connecting at least two facility modules of a facility, in particular a facility for surface treating and/or coating a workpiece, comprising:
- a positioning device (1) comprising a first coupling element (1.1) and a second coupling element (1.2) able to be brought into engagement with the first coupling element, said coupling elements having complementarily formed mating surfaces (2) which, when the coupling elements are brought together, cause centering and interlocking engagement of the coupling elements with respect to a first axis (x) and a second axis (y) essentially vertical with respect to the first axis, and
- a locking device (3) comprising a first closure element (3.1) and a second closure element (3.2) able to be brought into engagement with the first closure element which when in engagement cause interlocking engagement with respect to a further axis (z) essentially vertical with respect to the axes (x, y) and thus cause securing of the interlocking engagement of the two coupling elements (1.1, 1.2),
**characterised in that**
one closure element (3.1, 3.2) of the locking device (3) is configured as a clamping element comprising a bracket (6) articulated on a lever (7), a distal end (8) of said bracket (6) being able to be brought into engagement with the other one of said closure elements (3.2, 3.1).

2. The apparatus according to claim 1, **characterised in that** the mating surfaces (2) of one of said coupling elements (1.1, 1.2) form at least one essentially wedge-shaped recess (4) and/or one essentially wedge-shaped body (5) which is able to be brought into engagement with an essentially wedge-shaped recess (4) of the other one of said coupling elements (1.2, 1.1).

3. The apparatus according to claim 1 or 2, **characterised in that** one of said closure elements (3.1, 3.2) of the locking device (3) is connected to one of said coupling elements (1.1, 1.2) of said positioning device (1).

4. The apparatus according to any one of the preceding claims, **characterised in that** the clamping element includes a securing sleeve (9) surrounding said lever (7), said securing sleeve (9) being slidable with respect to the longitudinal axis (A) of said lever (7), wherein said sleeve (9) can assume a securing position in which actuation of said lever (7) and thus unlocking of the locking device (1) is prevented.

5. The apparatus according to claim 4, **characterised in that** the securing position of said securing sleeve (9) is visually indicated, preferably by means of a colour marking.

6. The apparatus according to any one of the preceding claims, **characterised in that** bores (10) are provided in the coupling elements (1.1, 1.2) for receiving mounting screws or bolts for connecting the coupling elements (1.1, 1.2) to the facility modules, wherein the bores (10) are preferably formed as elongate holes in order to facilitate alignment of said coupling elements.

7. The apparatus according to any one of the preceding claims, **characterised in that** said coupling elements (1.1, 1.2) are entirely or partially of metal, in particular grey cast iron, or ceramic or plastic, in particular polytetrafluoroethylene (PTFE).

8. A facility, in particular a facility for surface treating and/or coating a workpiece, comprising at least two facility modules, which are connected to each other by means of an apparatus according to any one of the preceding claims.

9. The facility according to claim 8, **characterised in that** a facility module comprises a frame structure (11) for receiving a separate functional unit (12) and at least one coupling element (1.1, 1.2) of an apparatus according to any one of claims 1 to 8 for connection with a further facility module.

10. The facility according to claim 9, **characterised in that** the frame structure (11) includes castors (13) or wheels for wheeling said facility module.

11. The facility according to any one of claims 8 to 10, **characterised in that** a facility module includes media and/or energy supply connectors by means of which it is connectable to external media and/or energy supply lines or to corresponding connectors of a further facility module, wherein each of said connectors is preferably implemented by means of quick-release couplings.

12. The facility according to any one of claims 8 to 11, **characterised in that** each facility module comprises its own control and/or regulating equipment adapted to each functional unit (12).

## Revendications

1. Dispositif pour relier de manière détachable au moins deux modules d'une installation, en particulier d'une installation pour le traitement de surface et/ou le revêtement d'une pièce à oeuvrer, comprenant :
- un dispositif de positionnement (1) comprenant un premier élément de couplage (1.1) et un second élément de couplage (1.2) susceptible d'être amené en engagement avec le premier élément de couplage, dont les surfaces d'appui réalisées complémentaires (2) provoquent, lors du rassemblement des éléments de couplage, un centrage et une coopération de formes des éléments de couplage par référence à un premier axe (x) et par rapport à un second axe (y) sensiblement perpendiculaire au premier axe, et
- un dispositif de verrouillage (3) comprenant un premier élément de fermeture (3.1) et un second élément de fermeture (3.2) susceptible d'être amené en engagement avec le premier élément de fermeture, lesquels provoquent, lorsqu'ils sont en engagement, une coopération de formes par référence à un autre axe (z) sensiblement perpendiculaire aux axes (x, y) et ainsi un blocage de la coopération de formes des deux éléments de couplage (1.1, 1.2),
**caractérisé en ce que**
un élément de fermeture (3.1, 3.2) du dispositif de verrouillage (3) est réalisé sous forme d'élément de tensionnement, qui comprend un arceau (6) articulé à un levier (7), dont l'extrémité distale (8) est susceptible d'être amenée en engagement avec l'autre élément de fermeture (3.2, 3.1).

2. Dispositif selon la revendication 1, **caractérisé en ce que** les surfaces d'appui (2) d'un élément de couplage (1.1, 1.2) forment au moins un évidement sensiblement en forme de coin (4) et/ou un corps (5) sensiblement en forme de coin, qui est susceptible d'être amené en engagement avec un évidement (4) sensiblement en forme de coin de l'autre élément de couplage (1.2, 1.1) respectif.

3. Dispositif selon la revendication 1 ou 2, **caractérisé en ce qu'**un élément de fermeture respectif (3.1, 3.2) du dispositif de verrouillage (3) est relié à un élément de couplage (1.1, 1.2) du dispositif de positionnement (1).

4. Dispositif selon l'une des revendications précédentes, **caractérisé en ce que** l'élément de tensionnement comprend une douille de blocage (9) qui entoure le levier (7) et qui est déplaçable par référence à l'axe longitudinal (A) du levier (7), ladite douille (9) pouvant occuper une position de blocage dans laquelle un actionnement du levier (7) et ainsi un déverrouillage du dispositif de verrouillage (1) est exclu.

5. Dispositif selon la revendication 4, **caractérisé en ce que** la position de blocage de la douille de blocage (9) est indiquée visuellement, de préférence par une marque de couleur.

6. Dispositif selon l'une des revendications précédentes, **caractérisé en ce qu'**il est prévu dans les éléments de couplage (1.1, 1.2) des perçages (10) pour la réception de vis de fixation ou de goujons vissés pour la liaison des éléments de couplage (1.1, 1.2) avec les modules de l'installation, lesdits perçages (10) étant de préférence réalisés sous forme de trous oblongs afin de permettre une orientation des éléments de couplage.

7. Dispositif selon l'une des revendications précédentes, **caractérisé en ce que** les éléments de couplage (1.1, 1.2) sont totalement ou en partie en métal, en particulier en fonte grise, ou bien en céramique ou en matière plastique, en particulier polytétrafluoroéthylène (PTFE).

8. Installation, en particulier installation pour le traitement de surface et/ou le revêtement d'une pièce à oeuvrer, comprenant au moins deux modules d'installation qui sont reliés l'un à l'autre via un dispositif selon l'une des revendications précédentes.

9. Installation selon la revendication 8, **caractérisée en ce qu'**un module de l'installation comprend une construction de cadre (11) pour la réception d'une unité fonctionnelle séparée (12), et **en ce que** l'un au moins des éléments de couplage (1.1, 1.2) comprend un dispositif selon l'une des revendications 1 à 8 pour la liaison avec un autre module de l'installation.

10. Installation selon la revendication 9, **caractérisée en ce que** la construction de cadre (11) comprend des rouleaux (13) ou des roues pour le déplacement du module de l'installation.

11. Installation selon l'une des revendications 8 à 10, **caractérisée en ce qu'**un module de l'installation comprend des raccords d'alimentation de fluide et/ou d'énergie, au moyen desquels il peut être branché à des lignes ou conduites externes d'alimentation en fluides et/ou en énergie, ou à des raccords correspondants d'un autre module de l'installation, les raccords respectifs étant de préférence effectués via des raccords rapides.

12. Installation selon l'une des revendications 8 à 11, **caractérisée en ce qu'**un module de l'installation comprend une propre unité de commande et/ou de régulation, accordée à l'unité fonctionnelle respective (12).
